# EUROPEAN PATENT SPECIFICATION

(11) **EP 4 361 750 B1**
(45) Date of publication and mention of the grant of the patent: **08.04.2026**
(21) Application number: 23205861.0
(22) Date of filing: 25.10.2023
(51) Int. Cl.: G05B 23/02, G06Q 10/20, G07C 5/08, B60C 23/04, B60C 19/00

(54) **COMPONENT SERVICE LIFE PREDICTION**
VORHERSAGE DER LEBENSDAUER EINES BAUTEILS
PRÉDICTION DE DURÉE DE VIE DE COMPOSANT

(30) Priority: 25.10.2022 GB 202215778
(43) Date of publication of application: 01.05.2024
(73) Proprietor: McLaren Automotive Limited, Woking, Surrey GU21 4YH (GB)
(72) Inventor: De Pinto, Stefano, Woking, GU21 4YH (GB); Sorniotti, Aldo, Woking, GU21 4YH (GB)
(74) Representative: Slingsby Partners LLP

(56) References cited:
- EP-A1- 2 703 194
- EP-A1- 3 318 422
- EP-A1- 3 786 903
- EP-A1- 4 015 250
- US-A1- 2005 150 283
- US-A1- 2006 156 790
- US-A1- 2019 009 618
- US-A1- 2019 084 355
- US-A1- 2019 265 129
- US-A1- 2022 324 266
- US-B2- 7 203 603

## Description

This invention relates to a method for predicting a service life of a component of a vehicle.

Vehicles comprise a plurality of components which have a limited service life. Many of these components will typically be replaced over the course of the lifetime of the vehicle. For instance, oil filters tend to be replaced every year or two and tyres are replaced when they have worn down. It is important for the reliability of the vehicle that these components are replaced at the appropriate time. However, it is also important from a user's perspective that components are not replaced unnecessarily due to the cost involved with replacement parts. Equally if a component needs to be replaced then it is important that a replacement is available when it is required.

Service intervals for various components are generally fixed based on the distance that the vehicle has travelled, the length of time between service intervals or a combination of the two. This may lead to vehicle components being replaced too frequently or not often enough. It would be desirable to improve the ability to decide when to replace a vehicle component based on its service life.

US2005/0150283 describes an on-board diagnostic system that predicts a wear condition of a tyre. US2019/0265129 describes a tyre management device which predicts the deterioration tendency and state of the tyres mounted to a vehicle. EP4015250 describes a method for real time prediction of tyre remaining useful life.

Another method for predicting the wear of at least one tyre fitted to a terrestrial motor vehicle is known from US2006156790 A1.

According to a first aspect of the present invention there is provided a method for predicting a service life for a component of a vehicle, the vehicle comprising a road wheel and at least one vehicle sensor configured to provide vehicle condition data, the road wheel comprising a tyre sensor configured to output tyre operation data, the method comprising: receiving tyre operation data from the tyre sensor, the tyre operation data comprising contact patch longitudinal load, contact patch radial load and contact patch deflection; receiving vehicle condition data from at least one vehicle sensor, the vehicle condition data describing a load on the body of the vehicle; and calculating a predicted service life for a vehicle component based on the tyre operation data, the vehicle condition data and a model of the vehicle component, wherein calculating a predicted service life for a vehicle component based on the tyre operation data, the vehicle condition data and a model of the vehicle component comprises using the contact patch longitudinal load, contact patch radial load, contact patch deflection and the vehicle condition data describing a load on the body of the vehicle as inputs for the model; and wherein the vehicle component is a tyre.

The tyre operation data may comprise a tyre identifier.

The vehicle condition data may describe a load on the body of the vehicle. The vehicle condition data may indicate a current wheel speed of the wheel. The vehicle condition data may indicate a current revolution speed of an engine.

Receiving tyre operation data from the tyre sensor may comprise receiving tyre operation data from the tyre sensor over a first time period, and receiving vehicle condition data from at least one vehicle sensor may comprise receiving vehicle condition data from at least one vehicle sensor over a second time period. The first time period and second time period may overlap. The first time period and the second time period may be the same.

Calculating a predicted service life for a vehicle component based on the tyre operation data, the vehicle condition data and a model of the vehicle component may comprise calculating a predicted service life for a vehicle component based on the tyre operation data, the vehicle condition data, a model of the vehicle component and a historic predicted service life.

Calculating a predicted service life for a vehicle component based on the tyre operation data, the vehicle condition data and a model of the vehicle component may comprise determining a number of revolutions of the vehicle component based on the vehicle condition data that indicates a current revolution speed of an engine.

The present invention will now be described by way of example with reference to the accompanying drawings. In the drawings:
Figure 1 shows a schematic plan of a vehicle.
Figure 2 shows a side view of an example wheel.
Figure 3 shows a flowchart of a method for predicting a service life for a component of a vehicle.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown.

The present invention relates to a method for predicting a service life for a component of a vehicle, the vehicle comprising a road wheel and at least one vehicle sensor configured to provide vehicle condition data, the road wheel comprising a tyre sensor configured to output tyre operation data. The method comprises receiving tyre operation data from the tyre sensor, and receiving vehicle condition data from at least one vehicle sensor. The method further comprises calculating a predicted service life for a vehicle component based on the tyre operation data, the vehicle condition data and a model of the vehicle component. The tyre operation data may be received over a time period. The vehicle condition data may be received over the time period. The model takes as its inputs the tyre operation data and the vehicle condition data over that time period. The output of the model is the predicted service life for a vehicle component.

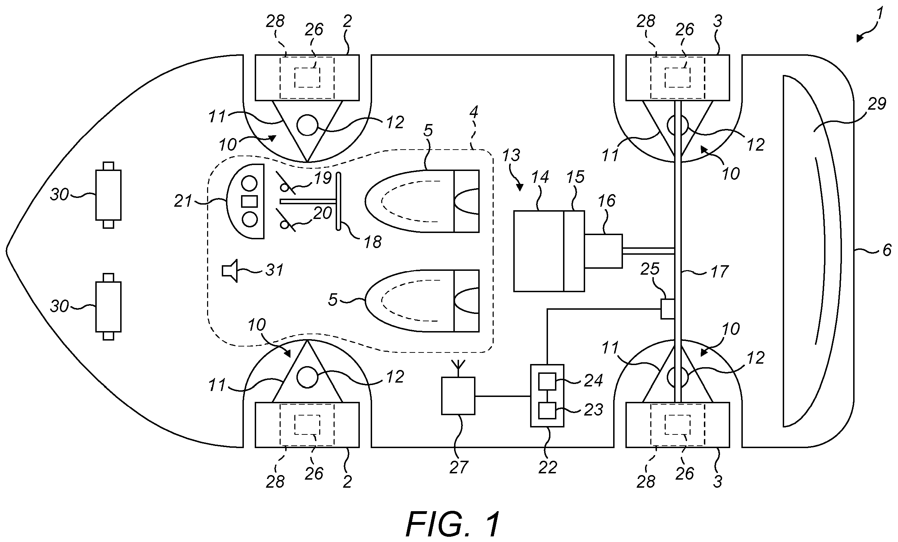

Figure 1 shows a vehicle 1. Figure 1 shows a plan schematic view of the vehicle 1. The vehicle may be an automobile. The vehicle 1 may be a car. The vehicle comprises front wheels 2 and rear wheels 3. The wheels 2, 3 are road wheels. The front of the vehicle 1 is defined with reference to the primary motion direction of the vehicle 1. The front of the vehicle 1 points in the primary motion direction of the vehicle. Generally, a vehicle has a primary motion direction that is the forward direction. The vehicle 1 comprises an occupant compartment 4. The occupant compartment 4 may comprise one or more seats 5 for occupants of the vehicle to sit in. The occupant compartment may accommodate a driver. The occupant compartment may accommodate one or more passengers.

The vehicle comprises a vehicle body 6. The vehicle body 6 generally comprises a plurality of body panels together with the underlying structure that supports components of the vehicle 1.

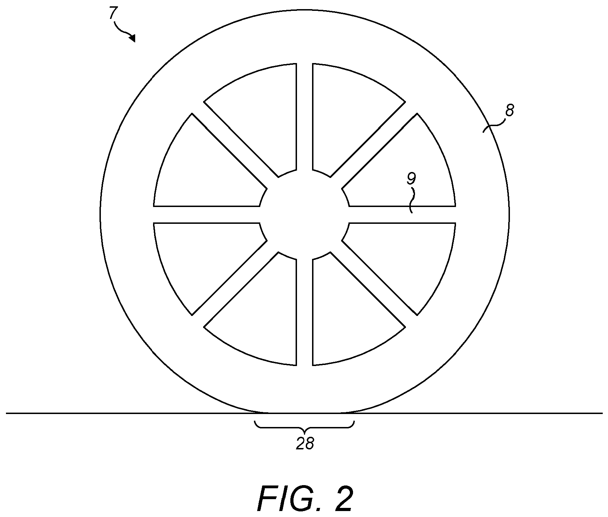

The wheels 2, 3 are mounted to the vehicle body 6 so that they can rotate and translate relative to the vehicle body 6. The wheels 2, 3 support the vehicle 1 on a running surface such as a road. In this way, the wheels 2, 3 are road wheels. Figure 2 shows a side view of an example wheel 7 that may be any of the front or rear wheels 2, 3. The wheel 7 comprises a tyre 8 and a wheel rim 9 to which the tyre 8 is fitted. The wheel rim 9 is configured so that it can be secured to the rest of the vehicle 1. For instance, the wheels 2, 3 are mounted on hub carriers. Thus, each wheel rim 9 is mounted on a hub carrier.

Each wheel can rotate relative to its respective hub carrier about a generally horizontal axis. This rotation axis may be known as the respective rolling axis of the respective wheel 2, 3. The wheels rotate about their respective rolling axes as the vehicle moves along a surface such as the ground due to the wheels contacting the ground and supporting the body of the vehicle against the ground. Each hub carrier is mounted to the body 6 of the vehicle 1 by a suspension mechanism indicated generally at 10. At least some of the wheels may be steerable wheels. The vehicle may comprise a pair of steerable wheels. The steerable wheels may be the front wheels 2. The suspension mechanisms 10 of the steerable wheels 2 are mounted to the hub carriers in such a way that each hub carrier can rotate about a respective steer axis. This thus causes the rolling axis of the wheel that is being steered to rotate about the steer axis.

The suspension mechanism 10 may comprise linkages 11 to connect the hub carrier to the vehicle body 6. The suspension mechanism 10 may comprise one or more suspension components 12 such as springs and/or dampers. The suspension components 12 may provide forces to the linkages 11 to control the motion and/or position of the linkages 11. In this way, the motion and/or position of the wheels 2, 3 relative to the vehicle body 6 can be controlled.

The vehicle 1 comprises a powertrain shown generally at 13. The powertrain 13 may comprise an internal combustion engine 14. The powertrain 13 may comprise one or more electric motors 15. The powertrain 13 may comprise one or more gearboxes 16 to adjust the rotational speed of the internal combustion engine 14 and/or the electric motor(s) 15. The powertrain 13 may be connected to one or more of the wheels 2, 3 by one or more drive shafts 17. In this way the powertrain 13 can drive one or more of the wheels 2, 3. The powertrain 13 may be formed of multiple separate units, each unit driving one or more of the wheels 2, 3. For instance, separate electric motors may individually drive the front wheels 2. In another example, an internal combustion engine 14 may drive the rear wheels 3 optionally with the assistance of one or more electric motors 15. These examples may be combined together. It will be appreciated that there are multiple configurations of powertrain units that may be present in a vehicle 1.

The vehicle 1 may comprise controls located within the occupant compartment 4 to enable an occupant to control the motion of the vehicle 1. One of those controls may be a steering wheel 18. The steering attitude of the wheels 2 is controlled by the steering wheel 18. The steering wheel 18 may be connected to the steered wheels 2 by a steering mechanism so that when the steering wheel 18 is rotated the steered wheels 2 rotate about their respective steer axis. Another of those controls may be a throttle pedal 19. The throttle pedal 19 enables an occupant to provide input on the required torque demanded from the powertrain 13. Generally, the further the throttle pedal 19 is depressed then the greater the torque demand from the driver. Another of those controls may be a brake pedal 20. The brake pedal 20 enables an occupant of to provide input on the braking force required by brakes that are attached to wheels 2, 3.

The vehicle 1 may comprise a display 21 which provides information to the occupants of the vehicle 1. The display 21 may also be referred to as a dashboard. The display 21 may display one or more instruments. The instruments providing information on the current status of the vehicle. For instance, how fast the vehicle is travelling, what gear the vehicle is in, and the speed of rotation of parts of the powertrain such as the internal combustion engine 14. The display 21 may also provide the occupants, and particularly the driver, with information on how to optimally control the vehicle in a given situation. For instance, the display 21 may indicate the optimal moment to change gear. The vehicle may comprise a speaker 31.

The operation of the vehicle is regulated by a Vehicle Control Unit (VCU) 22. The VCU 22 comprises a processor 23 and a non-volatile memory 24. The VCU 22 may comprise more than one processor 23 and more than one memory 24. The memory 24 stores a set of program instructions that are executable by the processor , and reference data such as look-up tables that can be referenced by the processor in response to those instructions. The processor 23 may be configured to operate in accordance with a computer program stored in non-transitory form on a machine readable storage medium. The computer program may store instructions for causing the processor to perform the operations of the VCU 22 in the manner described herein. The VCU 22 may be formed of a number of control units, such an Engine Control Unit, Power Source Control Unit, Gearbox Control Unit, and/or Suspension Control Unit. The VCU 22 is connected to various vehicle components to gather data about the operation of those components. The VCU 22 is connected to various vehicle components to provide control data to those components. The control data influencing the control of the relevant component.

The VCU 22 is connected one or more vehicle sensors 25. The vehicle sensor(s) 25 each provide vehicle condition data. The vehicle condition data that the sensor 25 provides will be dependent on what the sensor 25 is sensing. The vehicle sensors may include:
- A wheel speed sensor. The wheel speed sensor provides vehicle condition data that indicates the current wheel speed of the wheel the sensor is associated with. There may be a separate respective wheel speed sensor associated with each wheel of the vehicle.
- A gearbox gear sensor. The gearbox gear sensor provides vehicle condition data that indicates the current gear selected by the gearbox.
- An engine revolution speed sensor. The engine revolution speed sensor providing vehicle condition data that indicates the current revolution speed of the engine.
- A powertrain torque sensor. The powertrain torque sensor provides vehicle condition data that indicates the current output torque of the powertrain. There may be a separate powertrain torque sensor associated with each power source of the powertrain. For instance, a first powertrain torque sensor may be associated with the internal combustion engine and a second powertrain torque sensor may be associated with an electric motor that forms part of the powertrain. Each powertrain torque sensor provides vehicle condition data that indicates the current output torque of the respective power source.
- A brake pressure sensor. The brake pressure sensor provides vehicle condition data that indicates the brake pressure of a brake associated with a wheel of the vehicle. There may be separate respective brake pressure sensors for each wheel of the vehicle.
- A body force sensor. The body force sensor provides vehicle condition data on the load on the body of the vehicle. The body force sensor may provide vehicle condition data that indicates the lateral acceleration of the vehicle. The body force sensor may provide vehicle condition data that indicates the lateral acceleration of the vehicle. The body force sensor may provide vehicle condition data that indicates the longitudinal acceleration of the vehicle. The body force sensor may provide vehicle condition data that indicates the yaw of the vehicle. The body force sensor may provide more than one of these types of vehicle condition data. The body force sensor may provide all of these types of vehicle condition data. Alternatively, there may be more than one body force sensor which provides at least one of these types of vehicle condition data. The body force sensor may be in the form of an inertial measurement unit.

The VCU 22 controls one or more vehicle dynamics systems within the vehicle. The vehicle dynamics systems control elements of the operation of the vehicle. The vehicle dynamics systems control the operation of components of the vehicle. The vehicle dynamics systems are able to adjust the operation of components of the vehicle so that they operate in a particular way at a particular time. Each vehicle dynamics system may operate according to a respective set of predefined rules which define how the components under the control of the particular vehicle dynamics system operate. The vehicle dynamics systems may include:
- A vehicle ride height system. The vehicle ride height system controls the suspension systems 10 of the wheels to adjust the ride height of the vehicle 1. The suspension systems 10 may comprise an adjustable damper is configured to alter its length to adjust the ride heigh of the vehicle 1. The ride height of the vehicle 1 may be the distance between the body of the vehicle and the running surface that the wheels rest on. The ride height of the vehicle 1 may be the average distance between the body of the vehicle and the running surface. This may be the case where the underside of the vehicle is not level with the running surface.
- A stability control system. The stability control system controls the suspension system 10 of the wheels to counter movement of the body of the vehicle. The movement of the vehicle body may be relative to the wheels of the vehicle. The movement of the vehicle body may be caused by dynamic forces acting on the vehicle body during motion of the vehicle. The suspension system 10 may comprise one or more controllable linkages such as dampers. The stability control system may provide control signals to the controllable linkages to stabilise the vehicle at a given moment. The controllable linkages may be controlled to adjust the amount of resistance provided to the suspension system. The stability control system may control the controllable linkages to counter movement of the vehicle body.
- A torque vectoring control system. The torque vectoring control system controls the powertrain 13 of the vehicle to provide difference in torque to two or more wheels of the vehicle to provide a steering effect to those wheels. The difference in torque may be generated by causing at least two of the power sources of the powertrain to output different torques at a given moment.
- An active aero control system. The vehicle may comprise one or more active aerodynamic devices 29, 30. The aerodynamic devices 29, 30 may be in the form of one or more moveable wings such as a rear wing 29 as pictured in figure 1. The aerodynamic device 29, 30 may be in the form of one or more moveable flaps such as front flaps 30 as pictured in figure 1. The active aero control system provides inputs to the active aerodynamic devices 29, 30 to cause the active aerodynamic devices to adjust their aerodynamic performance.
- A traction control system. The traction control system controls the powertrain 13, brakes and/or differential of the vehicle to control the interaction of the wheels of the vehicle with the running surface. The traction control system controls these vehicle component(s) to attempt to improve the traction between the wheels and the running surface.

The VCU 22 may make use of a Kalman filter to undertake its methods. The Kalman filter is used to predict the state of the vehicle using data received from the vehicle sensors. The VCU 22 controls the vehicle dynamics systems in response to the predicted state of the vehicle.

As described herein, the vehicle comprises a road wheel 2, 3. The road wheel comprises a tyre sensor 26. The tyre sensor 26 is located within the wheel 2, 3. Each wheel may have a tyre sensor 26 associated with it as shown in figure 1. The tyre sensor 26 communicates with a tyre sensor receiver 27. The tyre sensor receiver 27 communicates wirelessly with the tyre sensor(s) 26. The tyre sensor(s) are separate to the vehicle sensors.

The tyre sensor 26 analyses the motion of the wheel to generate tyre operation data associated with the wheel. The tyre sensor 26 may analyse the relative motion of the tyre 8 relative to the wheel rim 9 to generate the tyre operational data. The tyre sensor 26 may analyse the interior conditions of the wheel (i.e. the region enclosed by the tyre and the wheel rim) to generate tyre operation data. The tyre sensor 26 may analyse a contact patch 28 associated with the tyre 8 to generate tyre operation data. The contact patch 28 being the portion of the tyre 28 that is in contact with a running surface of the vehicle 1. The tyre sensor 26 may be encoded with a tyre identifier which is provided as tyre operational data. The tyre sensor receiver 27 may process the tyre operational data received from the tyre sensor 26 to translate the data into a form that is readable by the vehicle's systems, such as the VCU 22.

The tyre operation data that the tyre sensor 26 outputs comprises the following types of tyre operation data:
- Contact patch longitudinal load. The contact patch longitudinal load is the load in the longitudinal direction of the tyre that is being placed on the contact patch of the tyre due to the current operation of the vehicle. The vehicle body 6 via the suspension 10 puts load on to the tyres during movement of the vehicle 1. This load causes forces on the tyre which generate a load in the longitudinal direction of the wheel 2, 3 and hence the tyre.
- Contact patch radial load. The contact patch radial load is the load in the radial direction of the tyre that is being placed on the contact patch of the tyre due to the current operation of the vehicle. The radial direction being a line that runs from the contact patch to the rotation axis of the wheel. When the vehicle is stationed on a flat horizontal running surface then the radial load operates in a vertical direction. The vehicle body 6 via the suspension 10 puts load on to the tyres during movement of the vehicle 1. This load causes forces on the tyre which generate a load in the radial direction of the wheel 2, 3 and hence the tyre.
- Contact patch deflection. The contact patch deflection is the amount that the contact patch has moved from a normal position. The normal position being the position of the contact patch when the vehicle is stationary and thus under no load. The contact patch deflection is caused by load being put on the tyres during movement of the vehicle 1. The load comes from the vehicle body 6 exerting forces on the tyres during movement of the vehicle 1.

The tyre operation data that the tyre sensor 26 outputs may comprise one or more of the following types of tyre operation data:
- A tyre identifier. The tyre identifier is an identifier for the tyre. **It** may provide the make and/or model of the tyre.
- Current tyre pressure. The current tyre pressure is the air pressure present in the interior region of the tyre. I.e. the region enclosed by the tyre and the wheel rim.

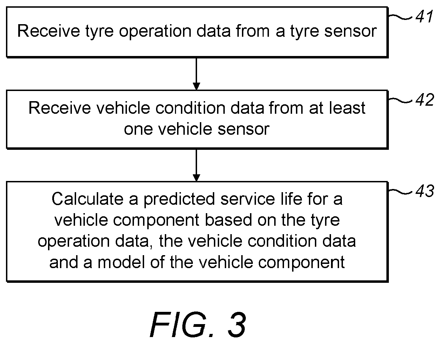

The tyre operational data can be used by the VCU 22 to improve a prediction around the service life of one or more components of the vehicle 1. This can ensure reliable operation of the vehicle 1 as components can be replaced or serviced at the optimum point. Such an improved method for predicting a service lift for a component of the vehicle that may be implemented by a VCU 22 will now be explained with reference to figure 3. Figure 3 shows a flowchart of such an improved method.

As shown at 41, tyre operation data is received from the tyre sensor. As described herein, the tyre operation data is received by the VCU 22 via the tyre sensor receiver 27. The tyre sensor receiver 27 may process the tyre operation data sent by the tyre sensor to put the tyre operation data in a form that is suitable for the VCU 22 to operate on. In normal operation, the tyre operation data is sent periodically to the VCU 22. Thus, the VCU 22 receives updated tyre operation data over time. The frequency of the sending of the tyre operation data may be such that it is in effect streamed to the VCU 22. I.e. the period between each update is short. The tyre operation data that is received by the VCU 22 may be any of the types of tyre operation data described herein. Some types of tyre operation data may be more static than others which are more variable. In this case some of the tyre operation data may be provided to the VCU 22 with a higher frequency than other types of tyre operation data. For instance, the tyre identifier may only need to be sent when the vehicle starts up, whereas the contact patch longitudinal load may be streamed to the VCU 22.

The tyre operation data is received over a time period. The time period may be long enough to collect sufficient data about the operation of the vehicle so that the service life can then be calculated. The time period may be the duration that the vehicle is activated and then deactivated. For instance, one trip of the vehicle 1. Alternatively, the time period may be a length of time measured in seconds or minutes.

As shown at 42, vehicle condition data is received from at least one vehicle sensor. As described herein, the VCU 22 is connected to one or more vehicle sensors to each provide vehicle condition data. In normal operation, the vehicle condition data is sent periodically to the VCU 22. Thus, the VCU 22 receives updated vehicle condition data over time. The frequency of the sending of the vehicle condition data by a particular sensor may be such that it is in effect streamed to the VCU 22. I.e. the period between each update is short. The vehicle condition data that is received by the VCU 22 may be any of the types of vehicle condition data described herein. Some types of vehicle condition data may be more static than others which are more variable. In this case some of the vehicle condition data may be provided to the VCU 22 with a higher frequency than other types of vehicle condition data. For instance, the current gear selected by the gearbox may only need to be sent when the vehicle changes gear, whereas the engine revolution speed may be streamed to the VCU 22.

The vehicle condition data is received over a time period. The time period may be long enough to collected sufficient data about the operation of the vehicle so that the service life can then be calculated. The time period may be the duration that the vehicle is activated and then deactivated. For instance, one trip of the vehicle 1. Alternatively, the time period may be a length of time measured in seconds or minutes. The vehicle condition data may be received over the same time period as the tyre operation data.

As shown at 43, a predicted service life for a vehicle component is calculated based on the tyre operation data, the vehicle condition data and a model of the vehicle component. The model of the vehicle component models the degradation of the component over time. The model takes as its inputs the tyre operation data and the vehicle condition data. The model outputs the predicted service life of the component. Depending on the use profile of the component the service life may be adjusted accordingly. The model may be generated by gathering data from testing of the vehicle component. For instance, a vehicle component either on its own or together with others, potentially even the whole vehicle, may be run for a specific length of time in particular conditions to simulate the use of that component. The degradation of the component can be measured over that time period to form part of the model. Multiple test runs of the vehicle component may be undertaken in different running conditions. Together the data from these test runs can form a set of data points which are included in the model of the vehicle component. The model extrapolates between these data points to provide a predicted service life for a vehicle component that is used in varying running conditions. The model may predict the service life of multiple vehicle components either separately or in combination. For instance, engine oil and oil filter are usually changed at the same time.

The tyre operation data can be indicative of the level of wear on components due to the style of driving. The tyre operation data may include the contact patch longitudinal load which is indicative of the longitudinal load that is placed on the vehicle. The tyre operation data may include the contact patch radial load which is indicative of the generally vertical load being placed on the vehicle. The tyre operation data may include the contact patch deflection which is indicative of the lateral load that is placed on the vehicle. The tyre operation data may include a longitudinal force exchange between the tyre and the ground. Each of these may be relevant to vehicle components that are stressed by load being placed on the vehicle via the wheels. For instance, the tyres themselves, suspension components, wheel hubs. This data may also be used as an input for vehicle components that have higher wear when the vehicle is driven under high load even if those components are not directly stressed by those loads. For instance, engine components may be stressed by the vehicle being driven with high load due to rapid changes in speed that may result from such driving style. In the case of the tyre being the vehicle component, the tyre operation data may be used to calculate a consistent degradation of the tyre. This may be detected when there is a significant difference between the received tyre operation data and the predicted tyre operation data calculated as part of the operational model of the vehicle. The predicted tyre operation data may be calculated by a Kalman filter.

The vehicle condition data provided by the sensors can also be indicative of the level of wear on components due to the style of driving. The body force sensor provides vehicle condition data on the load of the body of the vehicle. Therefore, vehicle condition data that describes a load on the body of the vehicle may be used in combination with the tyre operation data to generate a service life of the component. This is advantageous as it provides two different data sets that both contain information about the loading on the vehicle.

The vehicle condition data that is provided by the wheel speed sensor indicates the current wheel speed of the wheel. This can be used to determine the number of revolutions of components of the vehicle over time. Such as the tyres, drivetrain components, bearings. This can be used as an input for the model to determine the service length of the vehicle component.

The vehicle condition data that is provided by the engine revolution speed sensor indicates the current revolution speed of the engine. This can be used to determine the number of revolutions of components of the vehicle over time. In addition, this can be used to profile the stress put on the vehicle components over time. For instance, if the engine is run at a high revolution speed for a long period of time then this will put more strain on engine components as well as other vehicle components. This can therefore be used as an input for the model to determine the service length of the vehicle component.

The combination of tyre operation data and vehicle condition data over time may be based on the combination of:
i) model-based estimators. For example, extended or unscented Kalman filters or Luenberger observers, to combine measurements from the different sensors and determine the load profiles of the relevant components.
ii) data-driven estimators, based on artificial intelligence techniques. For example, artificial neural networks, for the estimation of the profiles of the variables that would require models of excessive level of complexity for model-based estimators.
iii) data-based algorithms including artificial intelligence techniques. For example, artificial neural networks, for the determination/prediction of the service length of the different components, starting from the vehicle measurements and the information from i) and ii).

The predicted service life of a vehicle component may be used to limit vehicle functions in the case that the predicted service life falls below a predetermined threshold. For instance, the maximum traction torque may be limited and/or a display recommends that the driver adopts a driving style with low lateral acceleration peaks by the appropriate amount. These interventions are designed to preserve the functionality of the component until the end of the current mission, and enable the driver to safely reach the service workshop afterwards. The reduction of the powertrain torque limits assists in the case of potential electric motor or drivetrain component failure, or in the form of data-driven algorithms.

The model may also take as an input a historic predicted service life. The historic predicted service life may be stored as part of the model which is then updated when further tyre operation data and vehicle condition data is received. Alternatively, the historic predicted service life may be provided to the model when the updated predicted service life is calculated.

The system and methods described herein use data provided from vehicle sensors together with data provided from tyre sensors to provide a better estimate of the service life of a vehicle component. This better estimate permits more accurate servicing of the vehicle and improved reliability. In view of the foregoing description it will be evident to a person skilled in the art that various modifications may be made within the scope of the invention.

## Claims

1. A method for predicting a service life for a component of a vehicle (1), the vehicle comprising a road wheel (2, 3) and at least one vehicle sensor (25) configured to provide vehicle condition data, the road wheel comprising a tyre sensor (26) configured to output tyre operation data, the method comprising:
receiving tyre operation data from the tyre sensor, the tyre operation data comprising contact patch longitudinal load, contact patch radial load and contact patch deflection;
receiving vehicle condition data from at least one vehicle sensor, the vehicle condition data describing a load on the body of the vehicle; and
calculating a predicted service life for a vehicle component based on the tyre operation data, the vehicle condition data and a model of the vehicle component, wherein calculating a predicted service life for a vehicle component based on the tyre operation data, the vehicle condition data and a model of the vehicle component comprises using the contact patch longitudinal load, contact patch radial load, contact patch deflection and the vehicle condition data describing a load on the body of the vehicle as inputs for the model; and
wherein the vehicle component is a tyre (8).

2. A method according to claim 1, wherein the tyre operation data comprises a tyre identifier.

3. A method according to any preceding claim, wherein the vehicle condition data indicates a current wheel speed of the wheel.

4. A method according to any preceding claim, wherein the vehicle condition data indicates a current revolution speed of an engine.

5. A method according to any preceding claim, wherein receiving tyre operation data from the tyre sensor comprises receiving tyre operation data from the tyre sensor over a first time period, and receiving vehicle condition data from at least one vehicle sensor comprises receiving vehicle condition data from at least one vehicle sensor over a second time period.

6. A method according to claim 5, wherein the first time period and second time period overlap.

7. A method according to claim 5 or 6, wherein the first time period and the second time period are the same.

8. A method according to any preceding claim, wherein calculating a predicted service life for a vehicle component based on the tyre operation data, the vehicle condition data and a model of the vehicle component comprises calculating a predicted service life for a vehicle component based on the tyre operation data, the vehicle condition data, a model of the vehicle component and a historic predicted service life.

9. A method according to any preceding claim as dependent on claim 4, wherein calculating a predicted service life for a vehicle component based on the tyre operation data, the vehicle condition data and a model of the vehicle component comprises determining a number of revolutions of the vehicle component based on the vehicle condition data that indicates a current revolution speed of an engine.

## Patentansprüche

1. Verfahren zum Vorhersagen einer Lebensdauer eines Bauteils eines Fahrzeugs (1), wobei das Fahrzeug ein Straßenrad (2, 3) und mindestens einen Fahrzeugsensor (25) umfasst, der dazu konfiguriert ist, Fahrzeugzustandsdaten bereitzustellen, wobei das Straßenrad einen Reifensensor (26) umfasst, der dazu konfiguriert ist, Reifenbetriebsdaten auszugeben, wobei das Verfahren Folgendes umfasst:
Empfangen von Reifenbetriebsdaten von dem Reifensensor, wobei die Reifenbetriebsdaten eine Aufstandsflächenlängslast, eine Aufstandsflächenradiallast und eine Aufstandsflächendurchbiegung umfassen;
Empfangen von Fahrzeugzustandsdaten von mindestens einem Fahrzeugsensor, wobei die Fahrzeugzustandsdaten eine Last auf der Karosserie des Fahrzeugs beschreiben; und
Berechnen einer vorhergesagten Lebensdauer für ein Fahrzeugbauteil basierend auf den Reifenbetriebsdaten, den Fahrzeugzustandsdaten und einem Modell des Fahrzeugbauteils, wobei das Berechnen einer vorhergesagten Lebensdauer für ein Fahrzeugbauteil basierend auf den Reifenbetriebsdaten, den Fahrzeugzustandsdaten und einem Modell des Fahrzeugbauteils das Verwenden der Aufstandsflächenlängslast, der Aufstandsflächenradiallast, der Aufstandsflächendurchbiegung und der Fahrzeugzustandsdaten, die eine Last auf der Karosserie des Fahrzeugs beschreiben, als Eingaben für das Modell umfasst; und
wobei das Fahrzeugbauteil ein Reifen (8) ist.

2. Verfahren nach Anspruch 1, wobei die Reifenbetriebsdaten eine Reifenkennung umfassen.

3. Verfahren nach einem vorhergehenden Anspruch, wobei die Fahrzeugzustandsdaten eine aktuelle Radgeschwindigkeit des Rads angeben.

4. Verfahren nach einem vorhergehenden Anspruch, wobei die Fahrzeugzustandsdaten eine aktuelle Drehzahl eines Motors angeben.

5. Verfahren nach einem vorhergehenden Anspruch, wobei das Empfangen von Reifenbetriebsdaten von dem Reifensensor das Empfangen von Reifenbetriebsdaten von dem Reifensensor über einen ersten Zeitraum umfasst und das Empfangen von Fahrzeugzustandsdaten von mindestens einem Fahrzeugsensor das Empfangen von Fahrzeugzustandsdaten von mindestens einem Fahrzeugsensor über einen zweiten Zeitraum umfasst.

6. Verfahren nach Anspruch 5, wobei sich der erste Zeitraum und der zweite Zeitraum überlappen.

7. Verfahren nach Anspruch 5 oder 6, wobei der erste Zeitraum und der zweite Zeitraum gleich sind.

8. Verfahren nach einem vorhergehenden Anspruch, wobei das Berechnen einer vorhergesagten Lebensdauer für ein Fahrzeugbauteil basierend auf den Reifenbetriebsdaten, den Fahrzeugzustandsdaten und einem Modell des Fahrzeugbauteils das Berechnen einer vorhergesagten Lebensdauer für ein Fahrzeugbauteil basierend auf den Reifenbetriebsdaten, den Fahrzeugzustandsdaten, einem Modell des Fahrzeugbauteils und einer historischen vorhergesagten Lebensdauer umfasst.

9. Verfahren nach einem vorhergehenden Anspruch in Abhängigkeit von Anspruch 4, wobei das Berechnen einer vorhergesagten Lebensdauer für ein Fahrzeugbauteil basierend auf den Reifenbetriebsdaten, den Fahrzeugzustandsdaten und einem Modell des Fahrzeugbauteils das Bestimmen einer Anzahl von Umdrehungen des Fahrzeugbauteils basierend auf den Fahrzeugzustandsdaten, die eine aktuelle Drehzahl eines Motors angeben, umfasst.

## Revendications

1. Procédé permettant de prédire une durée de vie d'un composant d'un véhicule (1), le véhicule comprenant une roue routière (2, 3) et au moins un capteur de véhicule (25) configuré pour fournir des données d'état de véhicule, la roue routière comprenant un capteur de pneu (26) configuré pour délivrer en sortie des données de fonctionnement de pneu, le procédé comprenant :
la réception de données de fonctionnement de pneu en provenance du capteur de pneu, les données de fonctionnement de pneu comprenant une charge longitudinale d'aire de contact, une charge radiale d'aire de contact et une déflexion d'aire de contact ;
la réception de données d'état de véhicule en provenance d'au moins un capteur de véhicule, les données d'état de véhicule décrivant une charge sur la carrosserie du véhicule ; et
le calcul d'une durée de vie prédite pour un composant de véhicule sur la base des données de fonctionnement de pneu, des données d'état de véhicule et d'un modèle du composant de véhicule, ledit calcul d'une durée de vie prédite pour un composant de véhicule sur la base des données de fonctionnement de pneu, des données d'état de véhicule et d'un modèle du composant de véhicule comprenant l'utilisation de la charge longitudinale d'aire de contact, de la charge radiale d'aire de contact, de la déviation d'aire de contact et des données d'état de véhicule décrivant une charge sur la carrosserie du véhicule comme entrées pour le modèle ; et
ledit composant de véhicule étant un pneu (8).

2. Procédé selon la revendication 1, lesdites données de fonctionnement de pneu comprenant un identifiant de pneu.

3. Procédé selon l'une quelconque des revendications précédentes, lesdites données d'état de véhicule indiquant une vitesse de roue actuelle de la roue.

4. Procédé selon l'une quelconque des revendications précédentes, lesdites données d'état de véhicule indiquant une vitesse de rotation actuelle d'un moteur.

5. Procédé selon l'une quelconque des revendications précédentes, ladite réception de données de fonctionnement de pneu en provenance du capteur de pneu comprenant la réception de données de fonctionnement de pneu en provenance du capteur de pneu sur une première période de temps, et ladite réception de données d'état de véhicule en provenance d'au moins un capteur de véhicule comprenant la réception de données d'état de véhicule en provenance d'au moins un capteur de véhicule sur une seconde période de temps.

6. Procédé selon la revendication 5, ladite première période de temps et ladite seconde période de temps se chevauchant.

7. Procédé selon la revendication 5 ou 6, ladite première période de temps et ladite seconde période de temps étant identiques.

8. Procédé selon l'une quelconque des revendications précédentes, ledit calcul d'une durée de vie prédite pour un composant de véhicule sur la base des données de fonctionnement de pneu, des données d'état de véhicule et d'un modèle du composant de véhicule comprenant le calcul d'une durée de vie prédite pour un composant de véhicule sur la base des données de fonctionnement de pneu, des données d'état de véhicule, d'un modèle du composant de véhicule et d'une durée de vie prédite historique.

9. Procédé selon l'une quelconque des revendications précédentes dépendant de la revendication 4, ledit calcul d'une durée de vie prédite pour un composant de véhicule sur la base des données de fonctionnement de pneu, des données d'état de véhicule et d'un modèle du composant de véhicule comprenant la détermination d'un nombre de tours du composant de véhicule sur la base des données d'état de véhicule qui indiquent une vitesse de rotation actuelle d'un moteur.
